**Europäisches Patentamt**

**European Patent Office**

**Office européen des brevets**

(19)

(11) Veröffentlichungsnummer: **0 217 838**
**B1**

# (12) EUROPÄISCHE PATENTSCHRIFT

(45) Veröffentlichungstag der Patentschrift:
**23.11.88**

(21) Anmeldenummer: **86901794.7**

(22) Anmeldetag: **12.03.86**

(86) Internationale Anmeldenummer:
**PCT/DE 86/00101**

(87) Internationale Veröffentlichungsnummer:
**WO 86/05547 (25.09.86 Gazette 86/21)**

(51) Int. Cl.⁴: **F 01 D 11/08,** F 01 D 9/04,
F 01 D 25/24

(54) **STRÖMUNGSMASCHINE MIT MITTELN ZUR KONTROLLE DES RADIALSPALTES.**

(30) Priorität: **14.03.85 DE 3509192**

(43) Veröffentlichungstag der Anmeldung:
**15.04.87 Patentblatt 87/16**

(45) Bekanntmachung des Hinweises auf die Patenterteilung:
**23.11.88 Patentblatt 88/47**

(84) Benannte Vertragsstaaten:
**DE FR GB IT SE**

(56) Entgegenhaltungen:
CH-A-264 083
FR-A-1 459 676
GB-A-2 087 979
GB-A-2 115 487

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **WILLKOP, Franz, Lipperheidestrasse 1, D-8000 München 60 (DE)**
Erfinder: **ZÄHRING, Gerhard, Brückenweg 5b, D-8031 Wörthsee (DE)**
Erfinder: **RÜTSCH, Robert, Theodor- Storm-Strasse 1, D-8047 Karlsfeld (DE)**
Erfinder: **POPP, Joachim, Adam- Stegerwald-Strasse 8, D-8060 Dachau (DE)**
Erfinder: **JOHN, Eberhard, Lauthstrasse 10 a, D-8000 München 50 (DE)**

**Beschreibung**

Bei Gehäusen von Strömungsmaschinen, vor allem mehrstufigen, ist die Angleichung des thermischen Zeitverhaltens an das des Rotors zur Gleichhaltung des Radialspaltes über Lauf- und Leitschaufeln bei Laständerung ein stetes Problem. Es ist bekannt, daß vor allem der Spalt über den Laufschaufeln großen Einfluß auf Wirkungsgrad, Pumpgrenze und Treibstoffverbrauch hat. Eine Senkung des Treibstoffverbrauchs bei gleichbleibender Leistung und Außenabmessungen des Triebwerks ist gefordert.

Bei der Konstruktion dieser Gehäuse sind neben o.a. Verhalten unter anderem folgende Kriterien zu berücksichtigen:

a) Geringes Gewicht
b) einfache Fertigung = grobe Toleranzen bei Unzugänglichkeit / feine Toleranzen bei Zugänglichkeit
c) enge Aufnahmenuten für die Leitschaufelfüße
d) leichte Montage
e) leichte Demontage
f) Rotor bei d) und e) beschaufelt und verschraubt
g) Anstreifbeläge vorsehen (enges Laufschaufelspiel)
h) leichte Reparatur
i) Rundheit der Gehäuse während der Fertigung
j) Rundbleiben der Gehäuse im Betrieb
k) Formtreue der Gehäuse in axialer Richtung im Betrieb

Bei den heute bekannten Konstruktionen wird generell in horizontal (oder vertikal) geteilte Gehäuse (z. B. DE-PS 3 315 914) und aus Ringen bestehende Gehäuse (DE-PS 3 018 621) unterteilt. Ein Topfgehäuse mit eingehängten Segmenten ist eine weitere bekannte Möglichkeit DE-PS 3 333 436).

Die Spaltkontrolle erfolgt im allgemeinen über Anblasung der Gehäuse (DE-OS 2 922 835), Belüftung des Rotors (DE-OS 3 308 140) oder Anbringung von Massen (DE-OS 2 907 748) im Gehäuse über den Laufschaufeln.

Aus der FR-A-1 459 676 ist eine gattungsgemäße Anordnung bekannt, bei der an den Innengehäuseteilen Leitschaufel unlösbar angeordnet sind. Nachteilig hierbei ist, daß die Radialstege der Belagträger erhebliche Wandstärke und somit hohes Gewicht aufweisen. Bei Beschädigung einer Leitschaufel muß ferner der gesamte Innengehäusering ausgewechselt werden.

Aufgabe der Erfindung ist, ein Gehäuse zu schaffen, das die eingangs genannten Kriterien berücksichtigt, eine Wirkungsgrad- oder Leistungsverbesserung oder Treibstoffverbrauchssenkung ermöglicht, ohne größer (insbesondere im Durchmesser) zu bauen. Ferner soll der Aufbau servicefreundlich sein.

Gelöst wird diese Aufgabe mit den Merkmalen des Anspruchs 1. Weitere Merkmale der Erfindung können Ansprüchen, Beschreibung und Zeichnung eines Ausführungsbeispiels entnommen werden.

Nachstehend sind einige Vorteile der Erfindung gegenüber dem Stand der Technik genannt.

Thermisches Verhalten:
optimiert durch Anordnung der Flansche über den Laufschaufeln und günstiges Verhältnis radiale Flanschhöhe zu Laufschaufellänge, durch Abschirmelemente und Wärmedämmschichten.

Fertigung:
Gehäuseteile besitzen Zentriersitze, (z. B. in 1) die gleichzeitig der Leitschaufelfußaufnahme dienen;
die mit Anlaufbelag versehenen Gehäuseteile sind separat zu behandeln, die Spritzschichten beidseitig einwandfrei zugänglich; keine tiefen, unzugänglichen Einstiche für die Leitschaufelfußaufnahme nötig.

Montage bei kompletten Rotor:
Bei z. B. bereits erfolgter Montage der Teile 1, 14 und 9 werden die Leitschaufeln 15 im Bereich des Maßes 32 radial nach innen gebracht und axial auf den Belagträger 9 geschoben. Ein Hilfsring 37 dient während des axialen Darüberschiebens des Gehäuses 3 zur radialen Fixierung der Leitschaufeln 15. In dieser Art wird bis Gehäuse 13 verfahren.

Demontage bei kompletten Rotor:
Erfolgt in umgekehrter Montagereihenfolge, wobei der Hilfsring 37 als Stütze gegen ein Mitwandern der Leitschaufeln dient.

Anstreifbeläge:
in eigenen Ringen (z. B. gegenüber 20 auf 9) enthalten, die leicht ausbaubar sind.

Reparatur:
Schaufelschaden siehe Demontage, Belagschaden siehe Anstreifbeläge.

Rundheit während Fertigung:
verhältnismäßig große radiale Flanschhöhe, Masse der Belagträger u.a. sichern eine größere Rundheit gegen bekannten Konstruktionen.

Rundheit im Betrieb:
durch Durchmesserzentrierung der korrespondierenden Gehäuseteile wesentlich besser als bei Bolzenzentrierung gewährleistet; steife, radial hohe Flansche (ohne Scallops) lassen sich bei Laständerung nicht in Vieleckform bringen.

Formtreue im Betrieb:
In axialer Richtung (Hauptachse) gleichmäßig und kräftig gestaltete und mittels Durchmesserzentrierung zusammengehaltene Gehäuseteile neigen kaum zu Verformungen.

Die Erfindung wird nachfolgend anhand der beigefügten Zeichnung weiter erläutert.

Dabei zeigt:

Fig. 1: einen Teilaxialschnitt durch eine Strömungsmaschine,

Fig. 2: einen vergrößerten Ausschnitt von Fig. 1.

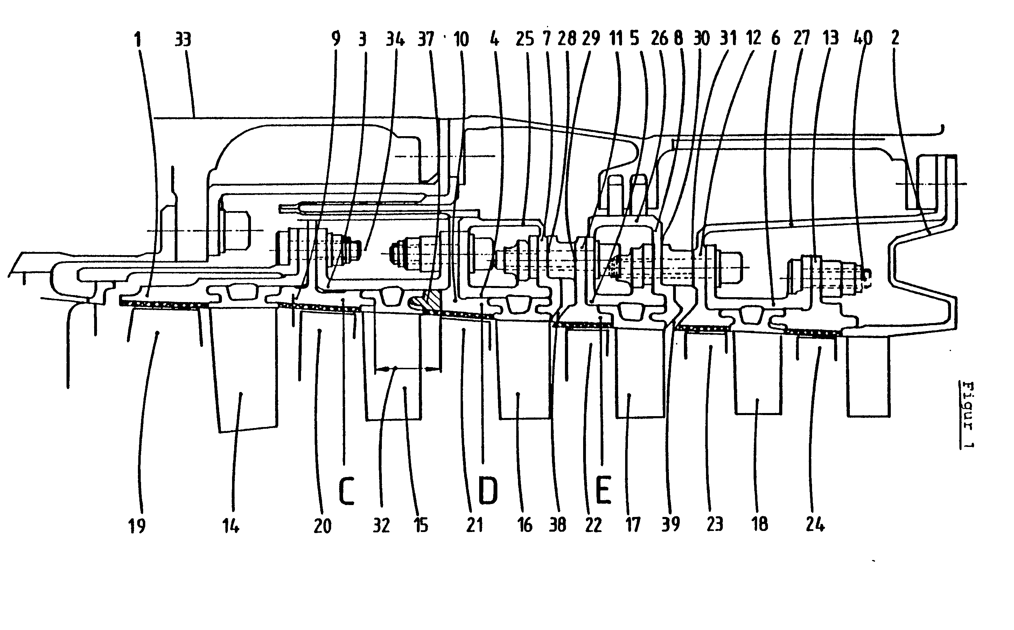

Fig. 1 zeigt den neuen Gehäuseaufbau mit Leitschaufeln in seiner Umgebung. Der Gehäusestrang besteht aus den Endgehäusen 1 und 2, den Verbindungsgehäusen 3, 4, 5 und 6, den Abblasegehäusen 7 und 8 sowie den Belagträgern 9, 10, 11, 12 und 13. Die Leitschaufeln sind mit 14, 15, 16, 17 und 18 gekennzeichnet, die angedeuteten Laufschaufeln mit 19, 20, 21, 22, 23 und 24.

Weiterhin sind zur Abschirmung der das thermische Verhalten bestimmenden Flanschpaare Abdeckungen 25, 26, 27 vorgesehen bzw. Wärmedämmschichten 28, 29, 30 und 31 aufgebracht

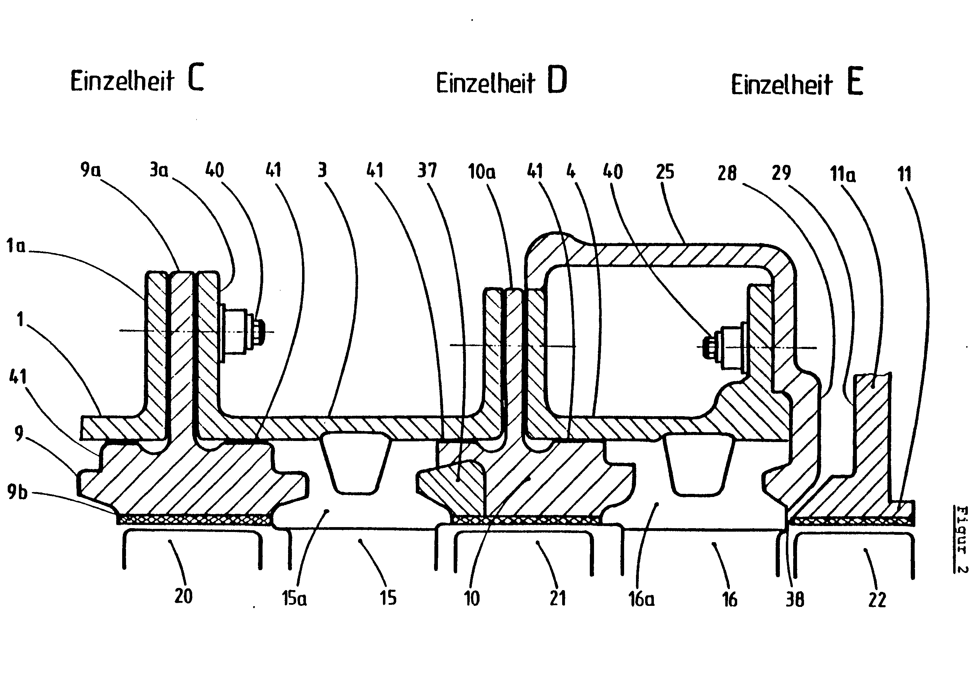

In Fig. 2 sind insbesondere die Umfangs-Zentriersitze 41 zwischen den Innengehäuseteilen 3, 4 und den Belagträgern 9a, 10a, 11a dargestellt sowie ein mit dem Innengehäuseteil 4 verbundenen Abdeckring 25.

Für die Gehäuse und sonstige Turbomaschinenkomponenten können bekannte Materialien verwendet werden. Dies gilt auch für die erwähnten Schaufeln und Beläge (Schichten). Auch die Herstelltechnik der Komponenten ist bekannt.

Eine bevorzugte Anwendung der Erfindung ist bei Strahltriebwerken für Flugzeuge zu sehen.

## Patentansprüche

1. Thermische Strömungsmaschine mit Mitteln zur Kontrolle bzw. Konstanthaltung des Radialspalts zwischen Rotor und innerem, aus schalenartigen Teilen zusammengesetztem Gehäuse, das Temperaturwechseln im Betrieb ausgesetzt ist, bei dem ferner Belagträger (9-13) und schalenartige Innengehäuseteile (3-6) in Axialrichtung abwechselnd hintereinander angeordnet und lösbar miteinander verbunden sind, indem Flansche der schalenartigen Innengehäuseteile (3-6) zwischen sich Radialstege der Belagträger (9-13) aufnehmen, die an einander zugekehrten Flächen Zentriersitze (41) aufweisen, dadurch gekennzeichnet, daß jeweils zwischen zwei benachbarten Belagträgern ein Fuß einer Leitschaufel (15-18) eingesetzt und formschlüssig gehalten ist, sowohl die Belagträger (9-13) als auch die schalenartigen Innengehäuseteile (3-6) eine thermisch träge Masse aufweisen, und über den schalenartigen Innengehäuseteilen (3-6) einstückige massive Abdeckringe (25-27) angeordnet sind.

2. Strömungsmaschine nach Anspruch 1, dadurch gekennzeichnet, daß ein mit einem Haltebund versehener Hilfsring (37) zur radialen Positionierung der Leitschaufeln (14-18) während der Montage des Gehäuses angewandt ist.

3. Strömungsmaschine nach den Ansprüchen 1 oder 2, dadurch gekennzeichnet, daß der Hilfsring (37) als Stütze gegen Mitwandern der Leitschaufeln (14-18) vorgesehen ist.

4. Strömungsmaschine nach einem der vorhergehenden Ansprüche, dadurch gekennzeichnet, daß zur Erhöhung der thermischen Masse ein Belagträger (9-13) für eine oder mehrere Wärmedämmschichten (28, 29; 30, 31) dient.

5. Strömungsmaschine nach Anspruch 4, gekennzeichnet durch die Anwendung einer stabilisierten Zirkondioxid-Spritzschicht als Anstreifbelag (9b-13b) für den Belagträger (9-13).

6. Strömungsmaschine nach einem der vorhergehenden Ansprüche, dadurch gekennzeichnet, daß die radialen Flansche (1a, 3a) der schalenartigen Innengehäuseteile (3-6) oder die Radialstege (9a-13a) der Belagträger (3-6) bis ca. 85 % der Länge einer zugehörigen Laufschaufel (19-24) aufweisen.

## Claims

1. Turbine heat engine with means of controlling or maintaining constant the radial gap between the rotor and the inner housing which is composed of shell-like parts, which in operation is subject to changes in temperature and in which furthermore lining carriers (9-13) and shell-like internal housing parts (3-6) are disposed alternately one after another in the axial direction, being connected to one another in a separable manner in that flanges on the shell-like inner housing parts (3-6) accommodate between them radial webs on the lining carriers (9-13) which have on mutually facing surfaces centring seats (41), characterised in that a root of a vane (15-18) is inserted and form lockingly held between any two adjacent lining carriers, both the lining carriers (9-13) and also the shell-like inner housing parts (3-6) having a thermally inert mass, one-piece solid cover rings (25-27) being disposed over the shell-like inner housing parts (3-6).

2. Turbine according to claim 1, characterised in that an auxiliary ring (37) provided with a retaining collar is used for radial positioning of the vanes (14-18) during assembly of the housing.

3. Turbine according to claims 1 or 2, characterised in that the auxiliary ring (37) is provided as a brace against sympathetic movement of the vanes (14-18).

4. Turbine according to one of the preceding claims, characterised in that to increase the thermal mass, one lining carrier (9-13) serves for one or a plurality of heat insulating layers (28, 29; 30, 31).

5. Turbine according to claim 4, characterised by the use of a stabilised zirconium dioxide coating as the touching lining (9b-13b) for the lining carrier (9-13).

6. Turbine according to one of the preceding Claims, characterized in that the radial flanges (1a, 3a) of the shell-like inner housing parts (3-6) or the radial webs (9a-13a) of the lining carriers (3-6) are up to approx. 85 % of the length of an associated vane (19-24).


**Revendications**

1. Turbomachine thermique comportant des moyens pour contrôler ou pour maintenir constant l'intervalle radial entre le rotor et le carter interne, composé de parties en forme de coquille et qui est exposé, au cours du fonctionnement, à des changements de température, carter dans lequel sont en outre disposés, alternativement et successivement en direction axiale, des supports (9 - 13) de revêtement et les parties en forme de coquille (3 - 6) du carter interne, ces supports et ces coquilles étant reliés ensemble de façon amovible, en ce que des brides de ces parties en forme de coquille (3 - 6) du carter interne reçoivent entre elles des voiles radiaux des supports (9 - 13) de revêtement, qui comportent des portées de centrage (41) sur leurs surfaces en regard l'une de l'autre, turbomachine caractérisée en ce que le pied d'une aube directrice (15 - 18) est inséré et maintenu par interpénétration de formes respectivement entre deux supports de revêtement voisins, les supports de revêtement (9 - 13) aussi bien que les parties en forme de coquille (3 - 6) du carter interne présentant une masse thermiquement inerte, tandis que des anneaux de recouvrement (25 - 27), chacun massif et d'une seule pièce, sont disposés sur les parties en forme de coquille (3 - 6) du carter interne.

2. Turbomachine selon la revendication 1, caractérisée en ce qu'un anneau auxiliaire (37), pourvu d'un bandeau de maintien, est utilisé pour positionner radialement les aubes directrices (14 - 18) pendant le montage du carter.

3. Turbomachine selon la revendication 1 ou 2, caractérisée en ce que l'anneau auxiliaire (37) est prévu pour jouer le rôle d'un appui s'opposant au deplacement des aubes directrices (14 - 18).

4. Turbomachine selon une des précédentes revendications, caractérisée en ce que, pour augmenter la passe thermique, un support de revêtement (9 - 13) est utilisé pour une ou plusieurs couches calorifuges (28, 29; 30, 31).

5. Turbomachine selon la revendication 4, caractérisée en ce qu on utilise pour le revêtement (9b - 13b), appliqué sur les supports de revêtement (9 - 13), une couche pulvérisée de bi-oxyde de zirconium stabilisé.

6. Turbomachine selon une des précédentes revendications, caractérisée en ce que les brides radiales (1a, 3a) des parties en forme de coquille (3 - 6) du carter interne, ou bien les voiles radiaux (9a - 13a) des supports de revêtement (3 - 6) ont jusqu'à environ 85 % de la longueur d'une aube directrice (19 - 24) qui leur est associée.

Figur 1

Figur 2